(19) **Europäisches Patentamt / European Patent Office / Office européen des brevets**

(11) **EP 4 560 628 A1**

(12) **EUROPEAN PATENT APPLICATION**

(43) Date of publication:
28.05.2025 Bulletin 2025/22

(51) International Patent Classification (IPC):
*G10L 21/0208* (2013.01)    *G10L 21/0272* (2013.01)
*G10L 25/30* (2013.01)    *H04R 25/00* (2006.01)

(21) Application number: 24215140.5

(22) Date of filing: 25.11.2024

(52) Cooperative Patent Classification (CPC):
G10L 21/0272; G10L 21/0208; G10L 25/30;
H04R 25/507; H04R 2225/43

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.11.2023 EP 23212284

(71) Applicant: Oticon A/S
2765 Smørum (DK)

(72) Inventors:
• PEDERSEN, Michael Syskind
2765 Smørum (DK)
• ZMOLÍKOVÁ, Katerina
2765 Smørum (DK)
• JENSEN, Jesper
2765 Smørum (DK)

(74) Representative: Demant
Demant A/S
Kongebakken 9
2765 Smørum (DK)

(54) **METHOD FOR TRAINING AN ALGORITHM FOR EXTRACTING AT LEAST ONE DESIRED COMPONENT**

(57) Disclosed is a method for training a first algorithm for extracting at least one desired component of a sound signal, the first algorithm comprising an encoder comprising at least one parameter, wherein the method comprises training (560) the encoder, comprising:
• obtaining (505) at least one partly masked in-domain data element, wherein the at least one partly masked in-domain data element comprises a noisy component,
• using the at least one partly masked in-domain data element to determine (515) a value of the at least one parameter of the encoder optimizing the prediction, by the first algorithm, of the noisy component in at least one masked part of the at least one partly masked in-domain data element.

START — 200

Receiving partly masked in-domain data elements — 210

Determine at least one parameter of the encoder — 220

END — 230

**FIG. 2C**

EP 4 560 628 A1

**Description**

TECHNICAL FIELD

The present disclosure relates to a method for training an algorithm, such as an artificial neural network, used to extract at least one desired component, typically a desired component of a sound signal.

The present disclosure is related to the field of speech enhancement and noise reduction, for example in hearing assistive devices such as hearing aids, headsets, earphones, handsfree telephone systems, mobile phones, teleconferencing systems, classroom amplification system etc. Specifically, the present disclosure is related to the use of artificial neural networks to perform speech enhancement and noise reduction.

BACKGROUND

Sound signals listened by people usually comprise a noisy component comprising a combination of a target component and a noise component. The target component defines the part of the sound signal generated by a desired sound source, and is for example a speech signal, while the noise component defines a part of the sound signal generated by at least one noise source or reflections on many surfaces of the sound signal generated by the desired sound source.

As the intelligibility of the target component can be poor in noisy environments, especially for hearing aid users, extraction of the target component by a hearing aid is crucial to help its user to understand speech in noisy environments.

Speech enhancement and noise suppression in hearing aids can be improved by use of a neural network, trained to suppress noise components and maintain target components (e.g. speech) of sound signals.

It is known to use a supervised leaning-based method to train the neural network. Such a supervised training requires a clean target signal paired with a noisy signal representing the same acoustic situation (the noisy signal therefore comprising the clean target signal and a noise signal).

However, it is typically not feasible to record simultaneously both the clean target signal and the noisy signal. Instead, a pair of simulated (i.e., synthetically generated) sound signals are used.

The generation of the sound signal is done by adding a clean speech signal and a noise signal to create a mixture signal, both clean and noise signals, for example, being taken from a publicly available database. However, neither the clean signal nor the mixture signal has the specific characteristics of sound signals picked up by the microphones in a hearing aid (the sound signal is therefore named out-of-domain data element).

In other words, there is a mismatch (or discrepancies) between the sound signals used for the training and the sound signals used by the trained neural network, when it is deployed in a hearing aid.

The mismatch can be due to different noise types, or different acoustic properties, such as different coloration of the sound due to the type of microphone, the type of placement, the distance to target speaker or reverberation patterns.

This leads to imprecise target extraction by the trained neural network. There is therefore a need for a solution to improve the accuracy of the target extraction.

SUMMARY

A method for training a first algorithm:

A first aspect of the disclosure is to provide a method for training an algorithm, hereafter named first algorithm, for extracting at least one desired component of a sound signal, hereafter named desired component. The first algorithm comprises an encoder, the encoder comprising at least one parameter.

The method comprises a training of the encoder, which comprises obtaining at least one partly masked in-domain data element, wherein the at least one partly masked in-domain data element comprises a noisy component.

The training of the encoder further comprises using the at least one partly masked in-domain data element, to determine a value of the at least one parameter of the encoder.

The value of the at least one parameter of the encoder is determined to optimize the prediction, by the first algorithm, of the noisy component in at least one masked part of the at least one partly masked in-domain data element.

An in-domain data element is a data element based on a sound signal acquired in a identical or similar sound environment/acoustic setup as the sound signal used by the trained first algorithm, with e.g. identical or similar noise type and/or identical or similar acoustic properties, such as identical or similar coloration of the sound due to an identical or similar type of microphone/input transducer, type of placement of the microphone, head- and torso-characteristics of the individual wearing the microphones (e.g., a hearing aid user), distance to a target speaker or reverberation patterns.

Therefore, the first algorithm is trained based on data elements matching the data elements used by the first algorithm after its training, during a run-time situation (the latest data elements being for example sound signals picked up by the microphones in a hearing aid). Consequently, the accuracy of the target extraction is improved.

Moreover, the improved accuracy is obtained while keeping the algorithm at a reasonable size, which is advantageous when the trained algorithm is stored in a small battery-driven device with limited available memory and processing power, such as a hearing aid.

Furthermore, the masking of the data element allows using an in-domain data element comprising a noisy component for training, i.e. determining the parameters/weights of the encoder (and decoder) of the first algorithm, which is easy to acquire as it does not imply a simultaneous acquisition of the noisy signal together with an underlying clean target signal.

In the present disclosure, the first algorithm comprises a procedure of arithmetic and/or algebraic steps used, when the first algorithm is trained, for extracting the target component (in this case the desired component) from a noisy component of the sound signal.

The first algorithm typically comprises a machine learning model e.g., an artificial neural network. The artificial neural network may comprise a multilayer perceptron and/or a feed forward neural network and/or a convolutional neural network and/or recurrent neural network.

The sound signal (and also the in-domain data element used in the training method) comprises a noisy component comprising a combination of the target component and a noise component. The target component represents the part of the sound signal generated by at least one desired sound source. The noise component represents the part of the sound signal generated by at least one noise source or undesired signal elements derived from the desired sound source such as high-order reflections (late reverberation).

Examples of sound signals generated by at least one desired sound source include parts of a speech signal, a mixture of speech signals, music, alarms, notification sounds, voice keywords, and tones generated by the desired sound source. The desired sound source can be a human or an output transducer.

Examples of sound signals generated by at least one noise source include parts of a speech signal, a mixture of speech signals, music, alarms, tones, sound artifacts such as microphone noise and quantization noise, room reverberation, sound reflections, howling sounds due to feedback, transient sounds, wind noise, noise due to handling of the microphones, echoes, and ambient sound such as environmental noise generated the at least one noise source.

The sound signal is typically picked up using an input transducer of a hearing aid, said input transducer being configured to measure acoustic energy of the sound and convert the acoustical energy into the electrical signal. The electrical signal may also be produced by an auxiliary device and received by the hearing aid.

Said sound signal may be represented in different temporal domains. For example, the sound signal may be represented in the time-domain. For example, the sound signal may be represented in the frequency domain. For example, the sound signal may be represented in the time-frequency domain.

In an embodiment, extracting the desired component of a sound signal wherein the sound signal comprises a noisy component comprising the desired component and a noise component includes:

- amplifying the desired component, while the power of the noise component remains identical or decreased compared to the power of the noise component before extraction,
- amplification of the desired component and the noise component, wherein the amplification of the desired component is larger than the amplification of the noise component. This may e.g. be the case if audibility of the noise component is still important,
- attenuating the noise component, while the power of the desired component either remains identical or increased compared to the power of the desired component before extraction,
- includes attenuation of the noise component and the desired component, wherein the attenuation of the noise component is larger than the attenuation of the desired component,
- increasing the signal-to-noise ratio (SNR), the SNR being defined as the ratio between the power of the desired component and the power of the noise component.

In an example, extracting the desired component includes spatial filtering (beamforming) of the noisy signal, i.e. a directional microphone with relatively larger gain in the direction of the target sound source than the at least one noise source.

The first algorithm comprises an encoder, wherein the encoder comprises at least one parameter, typically a plurality of parameters. The encoder further comprises a procedure of arithmetic and/or algebraic steps to compress an input to the encoder.

The input to the encoder is called an input data element, and may for example the at least one partly masked in-domain data element. The input data element may be pre-processed before being provided to the encoder by e.g. filtering, beamforming, and/or at least one mathematical transformation (e.g. the absolute value, exponentiation, logarithm, scaling, addition/subtraction, modulus, trigonometric functions).

In an example, the input data element comprises a plurality of numerical values. For example, each numerical value may represent an amplitude or magnitude or phase of a part of a sound signal. For example, each numerical value may represent a Discrete Fourier Transform coefficient of a part of a sound signal. The numerical values of the input data element may be stacked into one or more input vectors. In one or more examples, the dimension of each input vector equals the number of numerical values of the input data element.

The encoder produces an encoded data element. In a typical example, the encoded data element comprises equal or fewer data bits than the input data element.

In an example, the encoded data element provided by the encoder comprises a plurality of numerical values. The numerical values of the encoded data element may be stacked into an encoded vector. The dimension of the encoded vector equals the number of numerical values of the encoded data element.

In an example, the output of the encoder is an encoded vector, the length (i.e. the dimension) of the encoded vector being equal or shorter than the dimension of the input vector. For example, the dimension of the input vector is $M_{in}$ and the dimension of the encoded vector is $M_{out}$ such that $M_{out} \leq M_{in}$.

In an example, the encoder is also a feature extractor. For example, the encoder may extract relevant features in the input to encoder and discard irrelevant features that do not help extracting the desired component. For example, relevant features may be characteristics of speech (e.g. speech harmonics, fundamental frequency, spectral shape) and/or characteristics of noise (e.g. harmonics, spectral shape, modulation).

In an example, the first algorithm comprises a machine learning model such as an artificial neural network, wherein the encoder is a first part of the machine learning model.

In another example, the first algorithm comprises a plurality of machine learning models wherein the encoder is one of the machine learning models.

In the context of the present disclosure, a "data element" may be at least one time-segment of a sound signal comprising at least one component (e.g. noisy component, target component, desired component, noise component, mixture component). In another example, a data element may comprise two time-segments where the first time-segment is a part of the sound signal comprising a desired component and the second time-segment is a part of the sound signal comprising a mixture component.

In another example, a data element is at least one time-frequency segment of a sound signal comprising at least one component (e.g. noisy component, target component, desired component, noise component, mixture component). For example, the data element may comprise two time-frequency segments where the first time-frequency segment is a part of the sound signal containing a desired component and the second time-frequency segment is a part of the sound signal containing a mixture component.

The data element can be represented using real-valued numbers, for example when the data element comprises a magnitude representation of a time-frequency segment of the sound signal. In another example, the data element is represented using complex-valued numbers, for example when the data element comprises a time-frequency domain representation of a time-frequency segment of the sound signal.

As indicated above, an in-domain data element is a data element based on a sound signal acquired in a identical or similar sound environment than the sound signal used by the trained first algorithm, with e.g. identical or similar noise types and/or identical or similar acoustic properties, such as identical or similar coloration of the sound due to an identical or similar type of microphone, type of placement of the microphone (including a head-and-torso acoustics of an individual wearing the input transducer, e.g., a hearing-aid user), distance to a target speaker or reverberation patterns.

The sound environment may depend on the microphone, and specifically may depend on the acoustics of the location of the microphone (e.g. in a room or outdoors), the placement of the microphone on a person and/or an object, the distance between the microphone and the target source and/or the type of microphone.

For example, the sound signal on which the in-domain data element is based may be collected by an input transducer of a hearing aid, configured to measure the sound signal with certain acoustic properties, due e.g. to the placement of the hearing aid on the user, the head-and-torso acoustics of the user, the position of the input transducer on the hearing aid, the frequency response of the input transducer, and/or other elements that can affect the response of the sound signal picked up by the input transducer.

Therefore, the data element may be considered as an in-domain data element if the sound signal used by the trained first algorithm and the sound signal used to produce the in-domain data element are collected by similar input transducers of similar hearing aids with similar acoustic properties.

In an example, the in-domain data element is a part of a sound signal comprising a noisy component.

In an example, a global database, comprising an in-domain database, provides the in-domain data elements used to train the encoder of the first algorithm.

In the context of the present disclosure, the masked part of the at least one in-domain data element is a part of the in-domain data element which is removed, or hidden, or replaced with at least one pre-determined value (preferably a value of zero).

In an example, a partly masked in-domain data element is an in-domain data element comprising at least one masked part (e.g. at least one part replaced with values of zeros).

In the context of training an algorithm, the term 'training' is taken to mean a training procedure where the values of the parameters of the first algorithm are adjusted, for example to optimize (e.g. minimize) a loss (i.e. cost/objective) function. A training procedure may include a first loss function. The first loss function is used to arithmetically measure the performance of the first algorithm in solving an objective.

The training of the encoder comprises adjusting the values of at least one parameter (e.g. all parameters) of the encoder to optimize the prediction of the noisy component in the at least one masked part of at least one partly masked in-domain data element, i.e. to optimize the prediction of what was the noisy component in the part before the masking of this part.

In an example, the first loss function measures discrepancy between the at least one predicted noisy component in the at least one masked part and the corresponding noisy component of the at least one in-domain data element.

In an example, a plurality of in-domain data elements is used in the method for training the first algorithm. The in-domain data elements are typically acquired by an audio system comprising at least one input transducer to pick up at least one part of a sound signal. The at least one part of a sound signal may be stored locally on the audio system, and/or may be uploaded and stored on a server (e.g. in the global database) together with audio system information (e.g. location of the audio system, present time of the audio system, user information, device configuration). The server may generate in-domain data elements from the stored sound signals. The audio system and the server may be configured to exchange data wirelessly or using a wired connection, and/or through an auxiliary device functioning as an intermediate communication interface, such as a smartphone, a computer, an electronic memory device.

The audio system typically comprises at least one hearing aid, allowing obtaining in-domain data elements representing real condition of use of the first algorithm, i.e. having characteristics representing e.g. the user head filtering of the sound and/or the processing of the sound by the input transducer of the hearing aid. The audio system may also be a hearing aid system, a headset system, a speakerphone system, a microphone system, or a video conference system.

In an example, the training of the encoder further comprises obtaining at least one partly masked out-of-domain data element, comprising a mixture component comprising a target component and a noise component.

The training of the encoder further comprises using the at least one partly masked out-of-domain data element to determine the value of the at least one parameter of the encoder further optimizing the prediction, by the first algorithm, of the target component in at least one masked part of the at least one partly masked out-of-domain data element.

In an example, a plurality of masked out-of-domain data element are used to train the encoder, the values of a plurality of parameters being determined during the training of the encoder.

An out-of-domain data element is a data element based on a sound signal acquired in a possibly substantially different sound environment as the sound signal used by the trained first algorithm, with e.g. different noise types and/or different acoustic properties, such as different colorations of the sound due to a different type of microphone, type of placement of the microphone, distance to a target speaker or reverberation patterns.

For example, the sound signal on which the out-of-domain data element is based may be collected by an input transducer of a smartphone with certain acoustic properties, e.g. position of the input transducers on the smartphone, frequency response of the input transducers, and other elements that can affect the response of the sound signal picked up by the input transducers.

In an example, the mixture component is simulated/generated by combining/mixing the noise component with the target component.

An at least one partly masked out-of-domain data element is an out-of-domain data element having a noisy component comprising at least one masked part.

In an example, the out-of-domain data elements are obtained from at least one public database that comprises a plurality of sound signals.

In an example, an out-of-domain data element is based on at least two sound signals, the at least two sound signals being acquired simultaneously. Specifically, the two sound signals may be acquired by two input transducers, the first input transducer being located in close proximity to at least one target sound source, whereas the second input transducer is located further away from the target sound source, and for example near at least one noise sound source. The sound signal picked up by the first input transducer can then be used to provide the target component and the sound signal picked up by the second input transducer can then be used to provide the noise component of the out-of-domain data element.

The simultaneously acquired sound signals may be stored locally on an audio system comprising the first input transducer and the second input transducer, the audio system being for example a speakerphone system, a microphone system, or a video conference system, and/or may be uploaded and stored on a server together with audio system information. The audio system and the server may be configured to exchange data wirelessly or using a wired connection, and/or through an auxiliary device functioning as an intermediate communication interface, such as a smartphone, a computer, an electronic memory device.

In an example, the at least one partly masked out-of-domain data element is a partly masked spectrogram. In an example, the at least one partly masked in-domain data element is a partly masked spectrogram.

In the present disclosure, the term 'spectrogram' refers to a representation of the sound signal in frequency over time. A spectrogram is an example of the sound signal represented in the time-frequency domain. In an example, the spectrogram comprises the magnitude value of the time-frequency domain representation of the sound signal. In other examples, a spectrogram may be obtained using a short-time Fourier Transform (STFT) or other filter bank implementations. The time-frequency resolution may be linear or the frequency resolution may be non-linear, e. g. logarithmic. In an example, the spectrogram comprises the compressed magnitude (e.g., logarithmic value of) the time-frequency domain representation of the sound signal. In an example, the spectrogram is a complex-valued time-frequency representation of the sound signal.

A partly masked spectrogram defines a spectrogram where at least one part or portion of the spectrogram is removed, or hidden, or replaced with at least one pre-determined value (preferably zero). The portion of a spectrogram may be a patch, e.g. a part that can be represented with at least one single numerical (real or complex) value.

In an example, the at least one partly masked out-of-domain data element may is obtained by dividing a first out-of-domain data element, comprising a mixture component comprising a target component and a noise component, into a plurality of first patches and masking a predefined percentage of the plurality of first patches, to obtain the at least one masked part of the at least one partly masked out-of-domain data element.

In an example, the at least one partly masked in-domain data element may is obtained by dividing an in-domain data element, comprising at least one noisy component, into a plurality of second patches and masking a predefined percentage of the plurality of second patches, to obtain the at least one masked part of the at least one partly masked in-domain data element.

In an example, the predefined percentage is a value between 5% and 50%. More specifically, the predefined percentage may be a value between 20% and 40%. In an example, the predefined percentage is 40%. In an example, the decision of which patches are to be masked is randomized. The predefined percentage may depend on the resolution across time and frequency. In an example, the minimum area of a patch is given by a certain period of time times a certain range of frequencies (e.g. a frequency range corresponding to a 1/3 octave band).

In an example, the masked in-domain or the out-of-domain patches are uniformly distributed across time and frequency of the spectrogram. In an example, the masked in-domain or out-of-domain patches are distributed un-equally across frequency of the spectrogram. In an example, the size of the masked in-domain or out-of-domain patches is a function of their center frequency.

In an example, the first algorithm comprises a first decoder and a second decoder. The second decoder may also be trained during the training of the encoder using the at least one partly masked out-of-domain data element, the encoder and the second decoder being trained to optimize the prediction, by the first algorithm, of the target component in the at least one masked part of the at least one partly masked out-of-domain data element.

The first decoder may also be trained during the training of the encoder using the at least one partly masked in-domain data element, the encoder and the first decoder being trained to optimize the prediction, by the first algorithm, of the noisy component in the at least one masked part of the at least one partly masked in-domain data element.

The first decoder may also be trained during the training of the encoder using the at least one partly masked out-of-domain data element, the encoder and the first decoder being trained to optimize the prediction, by the first algorithm, of the target component in the at least one masked part of the at least one partly masked out-of-domain data element.

The first decoder and the second decoder each comprises a procedure of arithmetic and/or algebraic steps to decompress an input to the decoder, the decompressed input being referred to as a decoded signal.

In an example, the decoded signal by the first decoder and/or the second decoder is a sound signal. In an example, the decoded signal by the second decoder is the predicted target component of the at least one masked part of the at least one out-of-domain data element. In an example, the decoded signal by the first decoder is the predicted noisy component of the at least one partly masked in-domain data element.

An input to the first decoder and/or second decoder comprises the encoded data element, or a processed encoded data element where processing includes filtering, beamforming, and/or at least one mathematical transformation (e.g. the absolute value, exponentiation, logarithm, scaling, addition/subtraction, modulus, trigonometric functions).

In the example wherein the encoded data element is an encoded vector, each encoded vector element in the encoded vector represents a numerical value of the encoded data element. In this example, the output of the first decoder receiving the encoded vector is a first decoded vector, and the output of the second decoder receiving the encoded vector is a second decoded vector.

In an example, each of the first and second decoded vectors has more vector elements than the encoded vector, and preferably as many elements as the input vector to the encoder.

In an example, the decoded signal of the first decoder and/or second decoder is at least one target activity determination indicating the presence of a target component. For example, a target activity determination may comprise a value between '0' and '1' where a value of '1' represents the presence of a target component in the input to the decoder, and a value of '0' represents the absence of a target component. A value between '0' and '1' (not including '0' and '1') may be interpreted as a probability of the presence of a target component. For example, a value of 0.6 indicates a 60% chance of a target component being present in the input to the decoder.

In an example, the decoded signal is at least one noise-only determination indicating the presence of noise-only (i.e. no target component). For example, a noise-only determination may comprise a value between '0' and '1' where a value of '1' represents the presence of noise-only in the input to the decoder, and a value of '0' represents the absence of a noise-only (i.e. the presence of a target component). A value between '0' and ' 1' (not including '0' and ' 1') may be interpreted as a probability of the presence of noise-only. For example, a value of 0.6 indicates a 60% chance of noise-only being present in the input to the decoder.

The decoded signal typically comprises more data bits than the input to the decoder or as many bits as the input to the encoder.

In an example, during the training of the encoder, each of the first and the second decoder comprises at least one artificial neural network.

In an example, during the training of the encoder, the first algorithm comprises an artificial neural network with two parts, wherein the encoder is a first part of the artificial neural network and either the first or second decoder is the second part of the artificial neural network.

In another example, during the training of the encoder, the first algorithm comprises an artificial neural network with three parts, wherein the encoder is a first part of the artificial neural network, and the first decoder is a second part, and the second decoder is a third part of the artificial neural network.

In another example, during the training of the encoder, the first algorithm comprises two artificial neural networks wherein the encoder is the first artificial neural network and either the first or second decoder is the second artificial neural network.

In another example, during the training of the encoder, the first algorithm comprises three artificial neural networks wherein the encoder is the first artificial neural network. The first decoder is the second artificial neural network, and the second decoder is the third artificial neural network.

In an example, training the first algorithm comprises discarding the first decoder and/or the second decoder after the training of the encoder.

In an example, when using the at least one partly masked out-of-domain data element to determine the value of the at least one parameter of the encoder, the value of the at least one parameter is determined by minimizing a first loss function measuring discrepancy between a predicted target component and a corresponding target component of the at least one partly masked out-of-domain data element, i.e. the target component that was in the at least one masked part of the masked out-of-domain data element before the masking of this at least one part.

In an example, the objective of a first subpart of the first algorithm comprising the encoder and first decoder is to predict the target component from the at least one masked part of the at least one partly masked out-of-domain data element.

In another example, the objective of a second subpart of the first algorithm comprising the encoder and the second decoder, is to predict the noisy component from the at least one masked part of the at least one partly masked in-domain data element.

In an example, the objective of the second subpart of the first algorithm comprising the encoder and second decoder is to predict the mixture component from the at least one masked part of the at least one partly masked out-of-domain data element.

In an example, when using the at least one partly masked in-domain data element to determine the value of the at least one parameter of the encoder, the value of the at least one parameter is determined by minimizing a second loss function determining discrepancy between a predicted noisy component and a corresponding noisy component of the at least one partly masked in-domain data element, i.e. the noisy component that was in the at least one masked part of the masked in-domain data element before the masking of this at least one part.

In an example, the first loss function and/or the second loss function determine discrepancy. Determining discrepancy comprises determining a magnitude loss, by providing a logarithmic sum of squared errors between the absolute value of the predicted target component and the corresponding target component of the at least one partly masked out-of-domain data element (for the first loss function), or between the predicted noisy component and the corresponding noisy component of the at least one partly masked in-domain data element (for the second loss function).

In an example, determining the magnitude loss comprises computing the logarithm of the sum of squared errors between the absolute value of a first quantity (e.g. the corresponding noisy component or the corresponding target component) denoted $\mathbf{X}_{n,f}$ and a second quantity (e.g. the predicted noisy component or the predicted target component) denoted $\hat{\mathbf{X}}_{n,f}$. The magnitude loss is given as:

$$\mathcal{L}^{(\mathrm{mag})}\big(\mathbf{X}, \hat{\mathbf{X}}\big) = \log \sum_{n,f} \big(|\mathbf{X}_{n,f}| - |\hat{\mathbf{X}}_{n,f}|\big)^2.$$

In an example, the variable $n$ represent the time index and $f$ the frequency index.

In an example, determining the magnitude loss comprises computing the logarithm of the sum of powered errors between the absolute value of the first quantity and the second quantity given as

$$\mathcal{L}^{(\mathrm{mag})}\big(\mathbf{X}, \widehat{\mathbf{X}}\big) = \log \sum_{n,f} \big(|\mathbf{X}_{n,f}| - |\widehat{\mathbf{X}}_{n,f}|\big)^{\beta},$$

where $\beta$ is an exponent that may for example be chosen to be $\beta = 1$, $\beta = 2$, $\beta = 1/2$, etc.

In an example, determining discrepancy further comprises determining a phase loss, by providing a logarithmic sum of weighted squared (or weighted exponent $\beta$) errors between a normalized predicted target component and a normalized corresponding target component of the at least one partly masked out-of-domain data element (for the first loss function), or between a normalized predicted noisy component and a normalized corresponding noisy component of the at least one partly masked in-domain data element (for the second loss function).

In an example, determining discrepancy further comprises determining a magnitude-phase loss, by providing a weighted sum between the magnitude loss and the phase loss, wherein the weighting comprises at least one weighting factor.

In an example, determining the phase loss comprises computing the logarithm of the sum of weighted squared errors between the absolute value of a corresponding target component and an extracted/predicted target component (for the first loss function), the weighted being the absolute value of the corresponding target component. The phase loss is given as:

$$\mathcal{L}^{(\mathrm{phase})}\big(\mathbf{X}, \widehat{\mathbf{X}}\big) = \log \sum_{n,f} |\mathbf{X}_{n,f}| \cdot \left| \frac{\mathbf{X}_{n,f}}{|\mathbf{X}_{n,f}|} - \frac{\widehat{\mathbf{X}}_{n,f}}{|\widehat{\mathbf{X}}_{n,f}|} \right|^{2}.$$

In an example, determining the magnitude-phase loss comprises computing the magnitude loss and the phase loss and using a weight factor $\lambda$, to linearly combine then. The magnitude-phase loss is given by:

$$\mathcal{L}^{(\mathrm{magphase})}\big(\mathbf{X}, \widehat{\mathbf{X}}\big) = \mathcal{L}^{(\mathrm{mag})}\big(\mathbf{X}, \widehat{\mathbf{X}}\big) + \lambda \mathcal{L}^{(\mathrm{phase})}\big(\mathbf{X}, \widehat{\mathbf{X}}\big).$$

In other examples, measuring discrepancy can be done by computing the signal-to-noise ratio (SNR), the scale-invariant signal-to-noise ratio (SI-SNR), the cross-entropy and/or relative entropy between at least two quantities.

In an example, training the first algorithm further comprises adding a third decoder to the first algorithm, the third decoder comprising at least one parameter, and training the third decoder using the trained encoder.

In an example, the third decoder is the second decoder, the second decoder not being discarded. In an example, the at least one parameter of the third decoder is initialized by copying the parameters from the second decoder to the third decoder before discarding the second decoder.

The training the third decoder comprises obtaining a second out-of-domain data element comprising a mixture comprising at least one target component and at least one noise component.

The training the third decoder comprises using the at least one second out-of-domain data element to determine a value of the at least one parameter of the third decoder. The value of the at least one parameter of the third decoder is determined to optimize the prediction, by the first algorithm, of the target component of the second out-of-domain data element.

The third decoder may have the same structure as the first decoder and/or the second decoder. Moreover, the input of the third decoder may be an encoded data element provided by the trained encoder (or a processed version of such an encoded data element), having the same structure as the encoded data element inputted to the first decoder and/or the second decoder. The output of the third decoder may be a decoded signal having the same structure as the decoder signal outputted by the first decoder and/or the second decoder.

In an example, when using the at least one second out-of-domain data element to determine the at least one parameter of the third decoder, the at least one parameter is determined by minimizing a third loss function measuring discrepancy between a predicted target component and a corresponding target component of the at least one second out-of-domain data element.

In an example, the trained first algorithm comprises an artificial neural network with two parts, wherein the trained encoder is a first part of the artificial neural network, and the trained third decoder is the second part of the artificial neural network.

In another example, the trained first algorithm comprises two artificial neural networks wherein the trained encoder is the first artificial neural network, and the trained third decoder is the second artificial neural network.

In an example, the objective of the first algorithm comprising the encoder and third decoder, is to extract the target component of the second out-of-domain data element.

In an example, the method of training the first algorithm is performed by a processor of at least one hearing aid and/or at least one computer.

A method for training a second algorithm:

A second aspect of the disclosure is to provide a method for training a second algorithm for extracting at least one target component of a sound signal.

The method for training the second algorithm comprises using the trained first algorithm to extract at least one target component from at least one second in-domain data element comprising said target component.

The method for training the second algorithm further comprises using the at least one second in-domain data element and the at least one target component extracted from the at least one second in-domain data element, by the first algorithm, to determine the value of at least one parameter of the second algorithm optimizing the prediction of the at least one target component extracted from the at least one second in-domain data element.

In an example, the second algorithm comprises at least one artificial neural network. In an example, both the first and second algorithm comprises at least one artificial neural network.

In an example, the first algorithm is used to train the second algorithm by extracting a target component from the at least one second in-domain data element. The extracted target component may then be used as a training target for training the second algorithm. In an example, the parameters of the first algorithm are kept fixed and the second algorithm is trained during deployment.

In an embodiment, the objective of the second algorithm comprising an artificial neural network, is to predict the target component of the second in-domain data element.

A fourth loss function is used to arithmetically measure the performance of the second algorithm in solving its objective. In an example, scale-invariant signal-to-noise ratio (SI-SNR) is used as the fourth loss function for training the second algorithm.

In the context of training the first and/or second algorithm, the term 'training' includes a training procedure comprising an optimization procedure. For example, an optimization procedure includes a closed-form solution where the partial derivative of the first, second, third and/or fourth loss function with respect to one at least one of the parameters of the first and/or second algorithm are set to zero and solved for the at least one parameter.

In an example, the optimization procedure includes an iterative optimization algorithm. The iterative optimization algorithm comprises following steps:

- a first step comprises computing the partial derivative of the first, second, third and/or fourth loss function with respect to one at least one parameter of the first and/or second algorithm, and
- a second step where the at least one parameter is adjusted, i.e. updated. For example, the iterative optimization algorithm may comprise one of the following optimizers: stochastic gradient descent, Adam optimizer, AdaGrad optimizer, RMSprop optimizer.

In another example, the optimization procedure includes a combinatorial optimization algorithm such as genetic algorithms, where one advantage is that partial derivatives of the parameters of the first and/or second algorithm do not need to be computed.

In an example, training the first and/or second algorithm comprises using the global database of a plurality of in-domain data elements. The global database may be split into at least one set of the following datasets: a training set, a validation set, and a test set.

The training may be used to train the parameters of the first and/or second algorithm such that the first and/or second algorithm has an improved performance in solving their objective. The validation set may be used to fine-tune the parameters of the first and/or second algorithm and used to evaluate the performance of the first and/or second algorithm. The test set may be used to assess the first and/or second algorithm performances on unseen in-domain data elements, i.e. in-domain data elements that are not used during training and validation.

In an example, the training set is divided into a plurality of batches, i.e. subsets, such that the computation of the partial derivatives at each update step is based on one of the plurality of batches.

In an example, training the first and/or second algorithm comprises at least one epoch where an epoch refers to one complete pass through the entire training set. During an epoch, the first and/or second algorithm has seen and processed a plurality (preferably all) of the in-domain data elements in the training set.

In an example, the batches are randomly shuffled for each epoch including the first epoch, such that the computation of the partial derivatives and subsequently updating the parameters of the first and/or second algorithm does not follow a specific order of batches.

In an example, the training set is used to train the first and/or second algorithm and the validation set is used to measure the performance of the first and/or second algorithm during training. In an example, a cross-validation training scheme is used to train the algorithms where both the training set and the validation set are used to adjust the parameters of the first and/or second algorithm.

A third aspect of the disclosure it to provide a method of using a first algorithm for extracting at least one desired component of a sound signal, the first algorithm being trained according to the previously described method for training a first algorithm, or a method of using a second algorithm for extracting at least one sound target component of a sound signal, the second algorithm being trained according to the previously described method for training a second algorithm.

In an example, the first and/or the second algorithm is used to perform speech enhancement in a hearing aid, by extracting the target component of the sound signal.

A hearing aid comprising the first or the second algorithm:

A fourth aspect of the disclosure is to provide a hearing aid comprising at least one input transducer configured to receive at least one first sound signal comprising a desired component and/or a noise component from an acoustic environment. The input transducer provides at least one electrical signal representing the at least one first sound signal.

The hearing aid comprise the first algorithm being trained according to the previously described method for training a first algorithm, or the second algorithm being trained according to the previously described method for training a second algorithm. The first or second algorithm is configured to extract the at least one desired component of the at least one first sound signal.

The hearing aid comprises at least one output transducer, being configured to output a second sound signal based on the least one extracted target component.

A hearing aid:

An aspect of the disclosure is to use the trained first and/or second algorithm in a hearing aid.

The hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal. The signal processor may use the trained first or second algorithm, e.g. to perform speech enhancement.

The hearing aid may comprise an output unit for providing a stimulus perceived by the user as an acoustic signal based on a processed electric signal. The output unit may comprise a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation, or in a headset configuration).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

Most sound signal sources (except the user's own voice) are located far way from the user compared to dimensions of the hearing aid, e.g. a distance $d_{mic}$ between two microphones of a directional system. A typical microphone distance in a hearing aid is of the order 10 mm. A *minimum* distance of a sound source of interest to the user (e.g. sound from the user's mouth or sound from an audio delivery device) is of the order of 0.1 m (> 10 $d_{mic}$). For such minimum distances, the hearing aid (microphones) would be in the acoustic near-field of the sound source and a difference in level of the sound signals impinging on respective microphones may be significant. A *typical* distance for a communication partner is more than 1 m (>100 $d_{mic}$). The hearing aid (microphones) would be in the acoustic far-field of the sound source and a difference in level of the sound signals impinging on respective microphones is insignificant. The difference in *time of arrival* of sound impinging in the direction of the microphone axis (e.g. the front or back of a normal hearing aid) is $\Delta T = d_{mic}/v_{sound}$ =0.01/343 [s]=29 $\mu$s, where $v_{sound}$ is the speed of sound in air at 20°C (343 m/s).

The hearing aid may comprise antenna and transceiver circuitry allowing a wireless link to an entertainment device (e.g. a TV-set), a communication device (e.g. a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra WideBand (UWB) technology.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a 'forward' (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate $f_s$, $f_s$ being e.g. in the range from 8 kHz to 48 kHz (adapted to the particular needs of the application) to provide digital samples $x_n$ (or x[n]) at discrete points in time $t_n$ (or n), each audio sample representing the value of the acoustic signal at $t_n$ by a predefined number $N_b$ of bits, $N_b$ being e.g. in the range from 1 to 48 bits, e.g. 24 bits. Each audio sample is hence quantized using $N_b$ bits (resulting in $2^{Nb}$ different possible values of the audio sample). A digital sample x has a length in time of $1/f_s$, e.g. 50 $\mu$s, for $f_s$ = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency $f_{min}$ to a maximum frequency $f_{max}$ may comprise a part of the typical human audible frequency range from 20 Hz to 20 kHz, e.g. a part of the range from 20 Hz to 12 kHz.

Typically, a sample rate $f_s$ is larger than or equal to twice the maximum frequency $f_{max}$, $f_s \geq 2f_{max}$. A signal of the forward and/or analysis path of the hearing aid may be split into a number *NI* of frequency bands (e.g. of uniform width), where *NI* is e.g. larger than 5, such as larger than 10, such as larger than 50, such as larger than 100, such as larger than 500, at least some of which are processed individually. The hearing aid may be adapted to process a signal of the forward and/or analysis path in a number *NP* of different frequency channels *(NP ≤ NI)*. The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time). A voice signal may in the present context be taken to include a speech signal from a human being. It may also include other forms of utterances generated by the human speech system (e.g. singing). The voice activity detector unit may be adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise a target activity detector for determining whether or not (or with what probability) an input signal comprises a target signal (at a given point in time). A target signal may in the present context be taken to include a speech signal from a human being, alarms, music, notification sounds, and tones.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof.

The hearing aid may comprise a classification unit configured to classify the current situation based on input signals from (at least some of) the detectors, and possibly other inputs as well. In the present context 'a current situation' may be taken to be defined by one or more of

a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g. a trained neural network.

The hearing aid may comprise an acoustic (and/or mechanical) feedback control (e.g. suppression) or echo-cancelling system. Adaptive feedback cancellation has the ability to track feedback path changes over time. It is typically based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers (e.g. a microphone array) and a number of output transducers, e.g. one or more loudspeakers, and one or more audio (and possibly video) transmitters e.g. for use in an audio conference situation), e.g. comprising a beamformer filtering unit, e.g. providing multiple beamforming capabilities.

Use:

In an aspect, use of a hearing aid as described above, in the 'detailed description of embodiments' and in the claims, is moreover provided. Use may be provided in a system comprising one or more hearing aids (e.g. hearing instruments), headsets, ear phones, active ear protection systems, etc., e.g. in handsfree telephone systems, teleconferencing systems (e.g. including a speakerphone), public address systems, karaoke systems, classroom amplification systems, etc.

It is intended that some or all of the structural features of the device described above, in the 'detailed description of embodiments' or in the claims can be combined with embodiments of the method, when appropriately substituted by a corresponding process and vice versa. Embodiments of the method have the same advantages as the corresponding devices.

A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) methods described above, in the 'detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

A computer program:

A computer program (product) comprising instructions which, when the program is executed by a computer, cause the computer to carry out (steps of) the methods described above, in the 'detailed description of embodiments' and in the claims is furthermore provided by the present application.

A data processing system:

In an aspect, a data processing system comprising a processor and program code means for causing the processor to perform at least some (such as a majority or all) of the steps of the methods described above, in the 'detailed description of embodiments' and in the claims is furthermore provided by the present application.

<u>A hearing system:</u>

In a further aspect, a hearing system comprising a hearing aid as described above, in the 'detailed description of embodiments', and in the claims, AND an auxiliary device is moreover provided.

The hearing system may be adapted to establish a communication link between the hearing aid and the auxiliary device to provide that information (e.g. control and status signals, possibly audio signals) can be exchanged or forwarded from one to the other.

The auxiliary device may be constituted by or comprise a remote control, a smartphone, or other portable or wearable electronic device, such as a smartwatch or the like.

The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).

The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC, a wireless microphone, etc.) and adapted for selecting and/or combining an appropriate one of the received audio signals (or combination of signals) for transmission to the hearing aid.

The auxiliary device may be constituted by or comprise another hearing aid. The hearing system may comprise two hearing aids adapted to implement a binaural hearing system, e.g. a binaural hearing aid system.

<u>An APP:</u>

In a further aspect, a non-transitory application, termed an APP, is furthermore provided by the present disclosure. The APP comprises executable instructions configured to be executed on an auxiliary device to implement a user interface for a hearing aid or a hearing system described above in the 'detailed description of embodiments', and in the claims. The APP may be configured to run on cellular phone, e.g. a smartphone, or on another portable device allowing communication with said hearing aid or said hearing system.

<u>Definitions:</u>

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

FIG. 1 is a schematic representation of a hearing aid configured to use a first or second algorithm trained according to an example of the present disclosure,

FIG. 2A is a schematic representation of units and data used for training an encoder of a first algorithm, according to an example of the present disclosure,

FIG. 2B illustrates a block diagram of a masking unit for masking in-domain or out-of-domain data elements, according to an example of the present disclosure,

FIG. 2C illustrates a flow diagram, showing the steps for training an encoder of a first algorithm using in-domain data elements, according to an example of the present disclosure,

FIG. 3A is a schematic representation of units and data used for training for training an encoder and a first decoder of a first algorithm using in-domain or out-of-domain data elements, according to an example of the present disclosure,

FIG. 3B is a schematic representation of units and data used for training an encoder and a second decoder of a first algorithm using out-of-domain data elements, according to an example of the present disclosure,

FIG. 3C is a schematic representation of units and data used for training a third decoder of a first algorithm using out-of-domain data elements, according to an example of the present disclosure,

FIG. 4 is a schematic representation of units and data used for training a first algorithm using a database of in-domain data elements and a database of out-of-domain data elements, according to an example of the present disclosure,

FIG. 5 illustrates a flow diagram, showing the steps for training a first algorithm using in-domain and out-of-domain data elements, according to an example of the present disclosure,

FIG. 6 is a schematic representation of units and data used for training second algorithm using the trained first algorithm and in-domain data elements, according to an example of the present disclosure,

FIG. 7 illustrates a flow diagram, showing the steps for training a second algorithm using the trained first algorithm, and in-domain data elements, according to an example of the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

HEARING AID CONFIGURED TO USE A FIRST OR SECOND ALGORITHM:

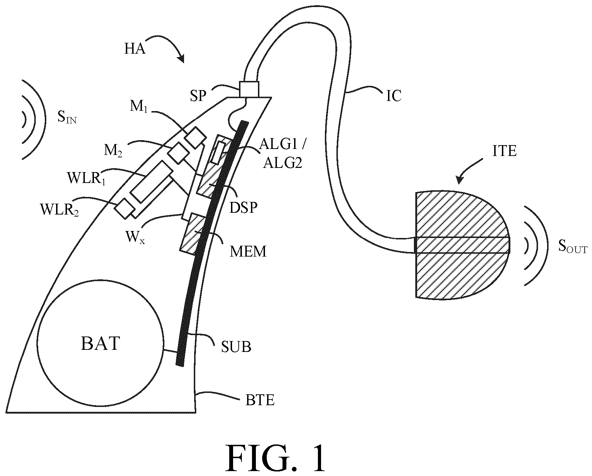

FIG. 1 shows an example of a hearing aid HA configured to use a first algorithm ALG1 or second algorithm ALG2 trained according to the present disclosure. In this example, the hearing aid HA is a BTE (for "Behind The Ear") style hearing aid. However, other hearing aid styles with similar functional components, e.g. RITE (for "Receiver In The Ear"), can be used as well and the description would be similar. The hearing aid HA according to the present disclosure comprises a BTE-part with a loudspeaker and an ITE (for "In The Ear") part connected by an acoustic propagation element. The BTE-part is adapted for being located at or behind an ear of a user and the ITE-part is adapted for being located in or at an ear canal of a user's ear.

The BTE-part and the ITE-part are connected (e.g. electrically connected) by a connecting element IC comprising an acoustic propagation channel, e.g. a hollow tube.

The BTE-part comprises first and second input transducers, e.g. microphones ($M_1$ and $M_2$), respectively, which are used to pick up sounds from the environment of a user wearing the hearing device (cf. sound field $S_{IN}$). Each input transducer produces an electrical signal representing the sound from the environment as picked up at the location of each respective input transducer.

The BTE-part further comprises a signal processor DSP, configured to receive the electrical signals from the input transducers $M_1$, $M_2$. The processor DSP is adapted to provide a frequency dependent gain and/or a level dependent compression and/or a transposition (with or without frequency compression) of one or frequency ranges to one or more other frequency ranges, e.g. to compensate for a hearing impairment of a user. The processor DSP further comprises the trained first algorithm ALG1 or the trained second algorithm ALG2 configured to extract the target component.

The hearing aid HA (here the BTE-part) may further comprise two (e.g. individually selectable) wireless receivers $WLR_1$, $WLR_2$ for providing respective directly received auxiliary audio input and/or control or information signals. The wireless receivers may be configured to receive signals from another hearing device (e.g. of a binaural hearing system) or from any other communication device, e.g. telephone, such as a smartphone, or from a wireless microphone or a T-coil. The wireless receivers may be capable of receiving (and possibly also of transmitting) audio and/or control or information signals. The wireless receivers may be based on Bluetooth or similar technology, or may be based on near-field communication (e.g. inductive coupling).

The BTE-part comprises a substrate SUB whereon a number of electronic components, such as a memory MEM, and the processor DSP, are mounted. The signal processor DSP form part of an integrated circuit, e.g. a (mainly) digital integrated circuit. The memory MEM is configured to store at least one time-segment of the electrical signals received from the input transducers, the stored time-segment is called an in-domain data element.

The BTE-part comprises an output transducer SP providing an enhanced output signal as stimuli perceivable by the user as sound based on an enhanced (e.g. amplified, frequency shaped, extracted target component) audio signal from the signal processor DSP or a signal derived therefrom. In the example of FIG. 1, the output transducer takes the form of a loudspeaker (receiver) SP for converting an electric signal to an acoustic signal. The loudspeaker SP is configured to play into the connecting element. The loudspeaker is connected by internal wiring in the BTE-part (cf. e.g. schematically illustrated as wiring $W_x$ in the BTE-part) to relevant electronic circuitry of the hearing device, e.g. to a processor DSP.

Alternatively or additionally, the enhanced audio signal from the signal processor DSP may be further processed and/or transmitted to another device depending on the specific application scenario.

The BTE-part may further comprise a battery BAT, e.g. a rechargeable battery, for energizing electronic components of the BTE-part and possibly (if any) the ITE-part.

The ITE-part comprises an ear-mould and is intended to allow a relatively large sound pressure level to be delivered to the ear drum of the user (e.g. to a user having a severe-to-profound hearing loss). Moreover, the ITE-part comprises a through-going opening allowing sound to be propagated via the connecting element to the ear drum of the user (cf. sound field $S_{OUT}$).

METHOD OF TRAINING A FIRST ALGORITHM:

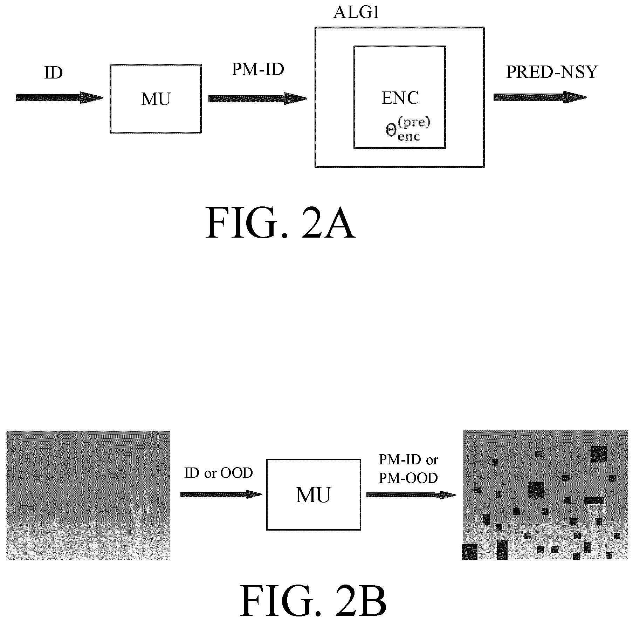

FIG. 2A illustrates an exemplary block diagram of units and data used for training an encoder ENC of a first algorithm ALG1 using in-domain data elements ID. Training the encoder ENC of the first algorithm ALG1 comprises determining the parameters of the encoder ( $\Theta_{enc}^{(pre)}$ ).

The first algorithm ALG1 receives at least one partly masked in-domain data element PM-ID. The at least one partly masked in-domain data element PM-ID is provided by a masking unit MU. The masking unit MU is configured to receive the at least one in-domain ID data element comprising a noisy component, and hereafter mask the at least one in-domain data elements ID, using a masking procedure, such as the masking procedure described with reference to FIG. 2B.

The encoder ENC receives the at least one partly masked in-domain data elements PM-ID and produces at least one encoded data element. The at least one encoded data element is received by a pre-trained decoder, the pre-trained decoder being configured to produce at least one prediction of at least one masked parts PRED-NSY of the at least one partly masked in-domain data element PM-ID.

FIG. 2B illustrates an exemplary block diagram of a masking unit MU for masking at least one in-domain data element ID or at least one out-of-domain data element OOD. The masking unit MU is configured to receiver either at least one in-domain data element ID, which comprises a noisy component, or at least one out-of-domain data element OOD, which comprises a mixture component comprising a target component and a noise component. In this example, the at least one in-domain data elements ID or at least one out-of-domain data element OOD comprises at least one spectrogram.

The masking unit is configured to use a masking procedure, wherein the masking procedure comprises randomly selecting a plurality of patches of various sizes of the at least one in-domain data elements ID and then substitutes the numerical values within each patch with at least one pre-determined value, e.g. zero.

The masking unit MU produces at least one partly masked in-domain data elements PM-ID if provided at least one in-domain data element ID or at least one partly masked out-of-domain data element PM-OOD if provided at least one out-of-domain data element PM-ID.

The partly masked in-domain data element comprises at least one masked part, typically a plurality of masked parts, wherein the noisy component is masked.

Similarly, the partly masked out-of-domain data element comprises at least one masked part, typically a plurality of masked parts, wherein the mixture component is masked.

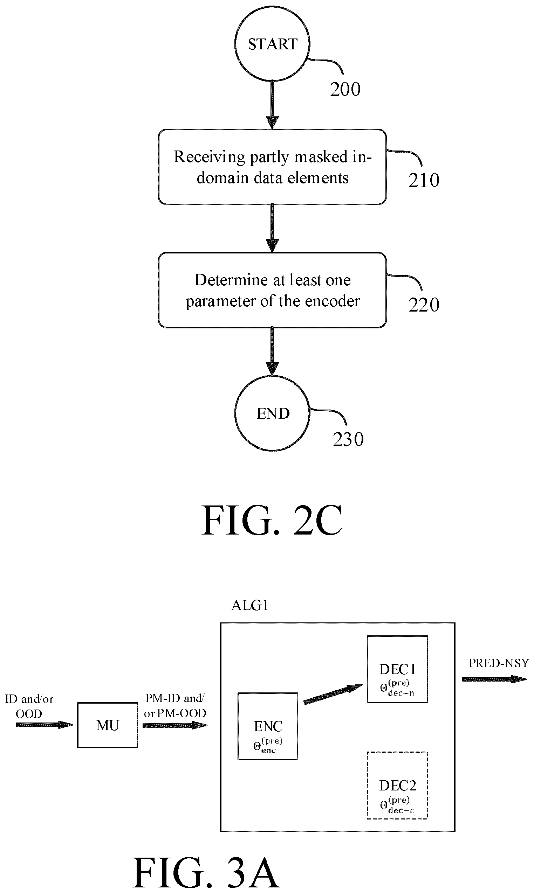

FIG. 2C illustrates an exemplary flow diagram, showing the steps for training an encoder ENC of a first algorithm ALG1 using at least one in-domain data element ID. The training starts at START 200 where parameters of the encoder ( $\Theta_{enc}^{(pre)}$ ) are initialized. The initial values of the parameters of the encoder may be chosen by either sampling values from a probability distribution, setting the values to a pre-determined value, e.g. zero, or copied from an pre-trained encoder, e.g. transfer learning.

The first algorithm ALG1 receives at least one partly masked in-domain data element PM-ID in step 210. The at least one partly masked in-domain data elements PM-ID is within the first algorithm ALG1 received by the encoder. The at least one partly masked in-domain data element is propagated through the first algorithm ALG1 which includes propagating through the encoder ENC. The first algorithm produces at least one prediction of masked parts PRED-NSY of the at least one partly masked in-domain data PM-ID, i.e. a prediction of the part of the noisy element that is masked by the masked parts. The parameters of the encoder are determined by updating the parameters using the at least one prediction of masked parts PRED-NSY and the at least one in-domain data element ID in step 220 using an iterative optimizer, e.g. the Adam optimizer. To compute the gradient or the partial derivative of each parameter a loss function is used, e.g. the magnitude-phase loss function. The magnitude-phase loss function is given by:

$$\mathcal{L}^{(\mathrm{magphase})}\big(\mathbf{Y}_{\mathrm{ID}}, \widehat{\mathbf{Y}}_{\mathrm{ID}}\big) = \mathcal{L}^{(\mathrm{mag})}\big(\mathbf{Y}_{\mathrm{ID}}, \widehat{\mathbf{Y}}_{\mathrm{ID}}\big) + \lambda\mathcal{L}^{(\mathrm{phase})}\big(\mathbf{Y}_{\mathrm{ID}}, \widehat{\mathbf{Y}}_{\mathrm{ID}}\big),$$

where

$$\mathcal{L}^{(\mathrm{mag})}\left(\mathbf{Y}_{\mathrm{ID}}, \widehat{\mathbf{Y}}_{\mathrm{ID}}\right) = \log \sum_{n,f} \left(\left|\mathbf{Y}_{\mathrm{ID},n,f}\right| - \left|\widehat{\mathbf{Y}}_{\mathrm{ID},n,f}\right|\right)^2 ,$$

and

$$\mathcal{L}^{(\mathrm{phase})}\left(\mathbf{Y}_{\mathrm{ID}}, \widehat{\mathbf{Y}}_{\mathrm{ID}}\right) = \log \sum_{n,f} \left|\mathbf{Y}_{\mathrm{ID},n,f}\right| \cdot \left|\frac{\mathbf{Y}_{\mathrm{ID},n,f}}{\left|\mathbf{Y}_{\mathrm{ID},n,f}\right|} - \frac{\widehat{\mathbf{Y}}_{\mathrm{ID},n,f}}{\left|\widehat{\mathbf{Y}}_{\mathrm{ID},n,f}\right|}\right|^2 ,$$

where $\mathbf{Y}_{\mathrm{ID}}$ represents the at least one in-domain data elements ID and $\widehat{\mathbf{Y}}_{\mathrm{ID}}$ represents the at least one predicted in-domain data elements PRED-NSY. In this embodiment, n represents the time-index and $f$ represent the frequency bin index of at least one in-domain data element comprising a spectrogram. The magnitude-phase loss function is a linear combination of the magnitude loss function and the phase loss function. The weight factor $\lambda$ is used to control the significance of the phase. The training of the first algorithm ends at END 230 after a predefined stopping criteria is met.

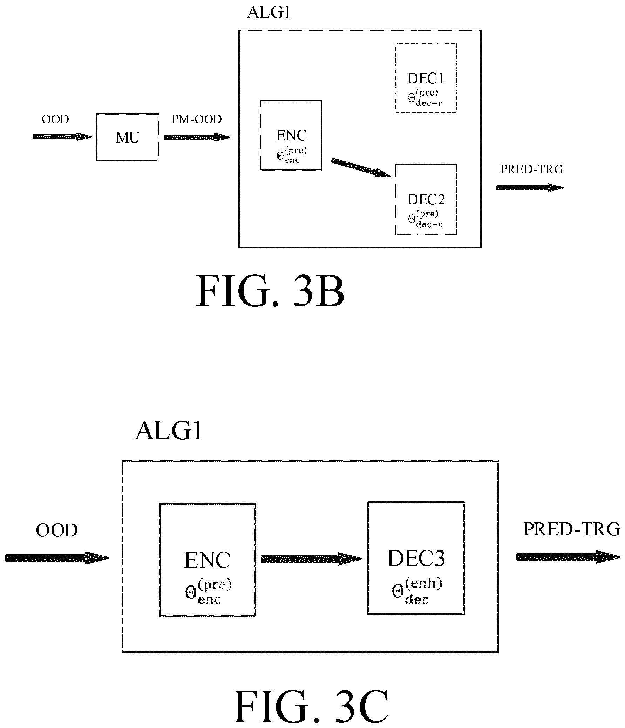

In the following descriptions of the embodiments illustrated in FIG. 3A, FIG. 3B, FIG. 3C, we use following notation for clarification. An out-of-domain data element OOD comprises a target component denoted as **S,** a noise component denoted as **V,** and a mixture component denoted as $\mathbf{Y}_{\mathrm{OOD}}$. The out-of-domain data element OOD is characterized in that all three elements are observable in isolation. The mixture component can be simulated or generated synthetically as a linear combination of the target component and noise component, for example:

$$\mathbf{Y}_{\mathrm{OOD}} = \mathbf{S} + \mathbf{V},$$

wherein the target component and/or noise component may be pre-processed, e.g. with filtering, amplification/attenuation, frequency shaping, beamforming before the linear combination. In the exemplary embodiments of FIG. 3A, FIG. 3B, FIG. 3C, the target, noise, and mixture components are all spectrograms in the time-frequency domain with the time-domain.

An in-domain database of a plurality of in-domain data elements ID is defined as a set/collection of in-domain data elements ID denoted as $\mathcal{D}_{ID} = \left\{\mathbf{Y}_{\mathrm{ID}}^{(1)}, \mathbf{Y}_{\mathrm{ID}}^{(2)}, ..., \mathbf{Y}_{\mathrm{ID}}^{(\mathrm{N_{ID}})}\right\}$ . Here, $\mathbf{Y}_{\mathrm{ID}}^{(\mathrm{n})}$ for n = 1,2, ..., $\mathrm{N_{ID}}$ represents the noisy component of the nth in-domain data element of $\mathcal{D}_{ID}$ . $\mathrm{N_{ID}}$ represents the number of in-domain data elements ID in the in-domain database.

An out-of-domain database of a plurality of out-of-domain data elements is defined as a set/collection of out-of-domain data elements denoted as $\mathcal{D}_{OOD} = \left\{\mathbf{Y}_{\mathrm{OOD}}^{(1)}, \mathbf{Y}_{\mathrm{OOD}}^{(2)}, ..., \mathbf{Y}_{\mathrm{OOD}}^{(\mathrm{N_{OOD}})}, \mathbf{S}^{(1)}, \mathbf{S}^{(2)}, ..., \mathbf{S}^{(\mathrm{N_{OOD}})}\right\}$ . Here, $\mathbf{Y}_{\mathrm{OOD}}^{(\mathrm{n})}$ for $n = 1,2, ..., \mathrm{N_{OOD}}$ represents the mixture component of the nth out-of-domain data element of $\mathcal{D}_{OOD}$ and $\mathbf{S}^{(\mathrm{n})}$ for n = 1,2, ..., $\mathrm{N_{OOD}}$ represents the corresponding target component of the nth out-of-domain data element of $\mathcal{D}_{OOD}$ . $\mathrm{N_{OOD}}$ represents the number of out-of-domain data elements OOD in the out-of-domain database. Furthermore, to make a clear distinction, a mixture-only out-of-domain $\mathcal{D}_{OOD}^{(noisy)}$ is a subset of $\mathcal{D}_{OOD}$ such that $\mathcal{D}_{OOD}^{(noisy)} \subseteq \mathcal{D}_{OOD}$ is defined to only contain the elements of the mixture components of $\mathcal{D}_{OOD}$ , i.e. excluding $\mathbf{S}^{(\mathrm{n})}$ for $n = 1,2, ..., \mathrm{N_{OOD}}$.

Training the first algorithm ALG1 comprises two training stages (or training phases). The first training stage is described with reference to FIG. 3A and FIG. 3B, and the second training stage is described with reference to FIG. 3C.

FIG. 3A illustrates an exemplary block diagram of units and data used for training an encoder ENC and a first decoder DEC1 of a first algorithm ALG1 using at least one in-domain data element ID or at least one out-of-domain data element OOD. A masking unit MU receives the at least one in-domain data element ID or the at least one out-of-domain data element OOD and respectively produces at least one partly masked in-domain data element PM-ID or at least one partly masked out-of-domain data element PM-OOD. The masking unit MU generates a binary mask (or a soft mask, for example, where the numerical values of the mask are between '0' and ' 1' including '0' and ' 1') denoted as **M** and applies it to the at least one in-domain data element ID or at least one out-of-domain data element OOD to respectively produce the at least one partly masked in-domain data element PM-ID or at least one partly masked out-of-domain data element PM-OOD. For the at least one out-of-domain data element PM-OOD, this is given by:

$$\overline{\mathbf{Y}}_{\mathrm{OOD}} = \mathbf{Y}_{\mathrm{OOD}} \odot \mathbf{M},$$

where $\overline{\mathbf{Y}}_{OOD}$ denotes the at least one partly masked out-of-domain data element PM-OOD and $\odot$ is the elementwise multiplication between two matrices (i.e. $\overline{\mathbf{Y}}_{OOD}$ and $\mathbf{M}$ are represented with equal sized matrices). For the at least one in-domain data element, this is given by:

$$\overline{\mathbf{Y}}_{ID} = \mathbf{Y}_{ID} \odot \mathbf{M},$$

where $\overline{\mathbf{Y}}_{ID}$ denotes the at least one partly masked in-domain data element PM-ID.

In in the example of FIG. 3A, the first algorithm comprises an encoder ENC, a first decoder DEC1 and second decoder DEC2.

The set of parameters of the encoder is denoted as $\Theta_{enc}^{(pre)}$, the set of parameters of the first decoder is denoted as $\Theta_{dec-n}^{(pre)}$, and the set of parameters of the second decoder is denoted as $\Theta_{dec-c}^{(pre)}$. The transformation of the encoder is denoted as $f_{\Theta_{enc}}$, the transformation of the first decoder is denoted as $f_{\Theta_{dec-n}}$, the transformation of the second decoder is denoted as $f_{\Theta_{dec-c}}$. The first algorithm ALG1 comprises two function composites wherein the first function composite comprises the encoder ENC and the first decoder DEC1. The first function composite produces at least one predicted mixture component PRED-NSY from the at least one partly masked out-of-domain data element PM-OOD or at least one predicted noisy component from the at least one partly masked in-domain data element PM-ID. For partly masked out-of-domain data element PM-OOD it is given by:

$$\widehat{\mathbf{Y}}_{OOD} = f_{\Theta_{dec-n}} \circ f_{\Theta_{enc}}(\overline{\mathbf{Y}}_{OOD}),$$

where $\hat{\mathbf{Y}}_{OOD}$ is the predicted mixture component PRED-NSY from the partly masked out-of-domain data element PM-OOD by the first function composite of the first algorithm ALG1, and $\circ$ denotes the function composition operator. Furthermore, the first function composite produces at least one predicted noisy component PRED-NSY from the at least one partly masked in-domain data element PM-ID i.e.

$$\widehat{\mathbf{Y}}_{ID} = f_{\Theta_{dec-n}} \circ f_{\Theta_{enc}}(\overline{\mathbf{Y}}_{ID}),$$

where $\hat{\mathbf{Y}}_{ID}$ is the predicted noisy components PRED-NSY from the partly masked in-domain data element PM-ID, by the first function composite of the first algorithm ALG1.

In FIG. 3A it is illustrated that the parameters of the encoder ENC and the first decoder DEC1 can be determined using both partly masked in-domain data elements PM-ID and partly masked out-of-domain data elements PM-OOD. For training the encoder and the first decoder using at least one partly masked in-domain data element PM-ID, the magnitude-phase loss function is used to measure discrepancy between the at least one predicted noisy component PRED-NSY and the noisy component of the at least one in-domain data element ID. This is given by

$$\mathcal{L}^{(magphase)}\left(\mathbf{Y}_{ID}, \widehat{\mathbf{Y}}\right) = \mathcal{L}^{(mag)}\left(\mathbf{Y}_{ID}, \widehat{\mathbf{Y}}\right) + \lambda\mathcal{L}^{(phase)}\left(\mathbf{Y}_{ID}, \widehat{\mathbf{Y}}\right).$$

Similarly, for training the encoder ENC and the first decoder DEC 1 using the at least one partly masked out-of-domain data element PM-OOD, the magnitude-phase loss function is used to measure discrepancy between the at least one predicted mixture components PRED-NSY and the mixture component of the at least one out-of-domain data element OOD.

$$\mathcal{L}^{(magphase)}\left(\mathbf{Y}_{OOD}, \widehat{\mathbf{Y}}\right) = \mathcal{L}^{(mag)}\left(\mathbf{Y}_{OOD}, \widehat{\mathbf{Y}}\right) + \lambda\mathcal{L}^{(phase)}\left(\mathbf{Y}_{OOD}, \widehat{\mathbf{Y}}\right).$$

A total noisy magnitude-phase loss function for using partly masked can be described by

$$\mathcal{L}^{(msp-n)} = \sum_{\mathbf{Y} \in \mathcal{D}_{ID} \cup \mathcal{D}_{OOD}^{(noisy)}} \mathcal{L}^{(magphase)}\left(\mathbf{Y}, \widehat{\mathbf{Y}}\right),$$

where U denoted the union between two sets, hence $\mathcal{D}_{\mathrm{ID}} \cup \mathcal{D}_{\mathrm{OOD}}^{(\mathrm{noisy})}$ denotes the combined database of the plurality of in-domain data elements $\mathcal{D}_{ID}$ and the database of the plurality of noisy-only out-of-domain data elements. The total noisy magnitude-phase loss function $\mathcal{L}^{(\mathrm{msp-n})}$ may also be referred to as the masked noisy spectrogram prediction (MSP) loss.

In FIG. 3B it is illustrated that the second function composite comprising the encoder ENC and the second decoder DEC2 produces at least one predicted target component PRED-TRG from the at least one partly masked out-of-domain data elements PM-OOD i.e.

$$\hat{\mathbf{S}} = f_{\Theta_{dec-c}} \circ f_{\Theta_{enc}}(\overline{\mathbf{Y}}_{\mathrm{OOD}}),$$

where $\hat{\mathbf{S}}$ is the predicted target component PRED-TRG from the partly masked out-of-domain data elements PM-OOD by the second function composite of the first algorithm ALG1.

In FIG. 3B it is illustrated that the parameters of the encoder ENC and the second decoder DEC2 can be determined using at least one partly masked out-of-domain data element PM-OOD. For training the encoder ENC and the second decoder DEC2 using at least one partly masked out-of-domain data element PM-OOD, the magnitude-phase loss function is used to measure discrepancy between the at least one predicted target component PRED-TRG and the target component of the at least one out-of-domain data element OOD. This is given by:

$$\mathcal{L}^{(\mathrm{magphase})}\big(\mathbf{S}, \hat{\mathbf{S}}\big) = \mathcal{L}^{(\mathrm{mag})}\big(\mathbf{S}, \hat{\mathbf{S}}\big) + \lambda \mathcal{L}^{(\mathrm{phase})}\big(\mathbf{S}, \hat{\mathbf{S}}\big).$$

A total target magnitude-phase loss function can be described by:

$$\mathcal{L}^{(\mathrm{msp-c})} = \sum_{\mathbf{Y}_{\mathrm{OOD}}, \mathbf{S} \in \mathcal{D}_{\mathrm{OOD}}} \mathcal{L}^{(\mathrm{magphase})}\big(\mathbf{S}, \hat{\mathbf{S}}\big).$$

Updating the parameters of the encoder ENC, the first decoder DEC 1, and the second decoder DEC2 are done jointly for a plurality of in-domain data elements ID and out-of-domain data elements OOD, hence a total magnitude-phase loss function for using partly masked can be described by

$$\mathcal{L}^{(\mathrm{msp})} = \mathcal{L}^{(\mathrm{msp-n})} + \mathcal{L}^{(\mathrm{msp-c})}.$$

The first stage of training the encoder ENC, the first decoder DEC1, and the second decoder DEC2 thus overall solves the following optimization problem:

$$\Theta^{(\mathrm{pre})} = \arg \min_{\Theta} \mathcal{L}^{(\mathrm{msp})},$$

where $\arg \min_{\Theta} \mathcal{L}^{(\mathrm{msp})}$ refers to the argument (i.e. the parameters of the encoder ENC, first decoder DEC1 and the second decoder DEC2) of minimizer of $\mathcal{L}^{(\mathrm{msp})}$ and that $\Theta^{(\mathrm{pre})} = \Theta_{\mathrm{enc}}^{(\mathrm{pre})} \cup \Theta_{\mathrm{dec-n}}^{(\mathrm{pre})} \cup \Theta_{\mathrm{dec-c}}^{(\mathrm{pre})}$ refers to $\Theta^{(\mathrm{pre})}$ being the combined set of parameters of the encoder ENC, the first decoder DEC1, and the second decoder DEC2. To solve the optimization problem an iterative optimization algorithm is used. When the parameters of the encoder ENC, the first decoder DEC1 and the second decoder DEC2 have been determined using the iterative optimization algorithm, the first stage of training the first algorithm ALG1 is done.

In FIG. 3C, an exemplary block diagram of the second training stage for training the first algorithm ALG1 is shown. The second training stage comprises training the first algorithm ALG1 using at least one out-of-domain data elements OOD. In the second training stage, the first and second decoder DEC1, DEC2 from the first training stage are discarded. The first algorithm ALG1 comprises the trained encoder ENC wherein the parameters of the trained encoder ENC are obtained from the first stage. The first algorithm ALG1 further comprises a third decoder DEC3. The encoder ENC and the third decoder DEC3 are configured to extract the target component from the mixture component of the at least one partly masked out-of-domain data element PM-OOD.

The parameters of the third decoder DEC3are determined using another loss function. The loss function comprises the scale invariant signal-to-noise ratio SI-SNR. The loss function used for the second stage is given by:

$$\mathcal{L}^{(\text{SI}-\text{SNR})} = \sum_{\mathbf{Y}_{\text{OOD}},\mathbf{S} \in \mathcal{D}_{\text{OOD}}} \text{SISNR}(\mathbf{s}, \hat{\mathbf{s}}) + \text{SISNR}(\mathbf{v}, \hat{\mathbf{v}}).$$

The SI-SNR between the extracted target component and the corresponding target component of the at least one partly masked out-of-domain data element PM-OOD is given as

$$\mathcal{L}^{(\text{SI}-\text{SNR})} = 10 \log_{10}\left(\frac{\sum_{t_1}|s_{trg}(t_1)|^2}{\sum_{t_2}|e_{noise}(t_2)|^2}\right),$$

where

$$s_{trg}(t) = s(t)\frac{\sum_\tau \hat{s}(\tau)s(\tau)}{\sum_\tau|s(\tau)|^2},$$

$$e_{noise}(t) = \hat{s}(t) - s_{trg}(t).$$

After training the first algorithm, the parameters of the encoder ENC and the third decoder DEC3 may then be fixed. The first algorithm ALG1 may then be used to extract target components from sound signals picked up by, e.g. an input transducer of a hearing aid.

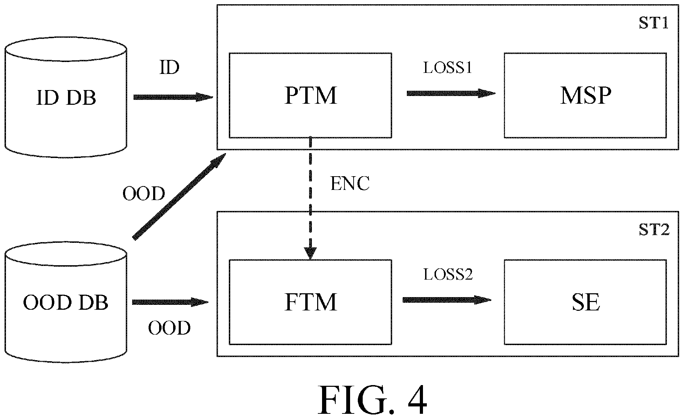

FIG. 4 illustrates an exemplary overview of data and units used for training a first algorithm, using a database of in-domain data elements ID-DB and a database of out-of-domain data elements OOD-DB.

Training the first algorithm ALG1 comprises a first training stage ST1 and a second training stage ST2, the first training stage ST1 being performed before the second training stage ST2.

An in-domain database ID-DB comprising a plurality of in-domain data elements ID is used to train the first algorithm. Specifically, the in-domain database ID-DB provides in-domain data elements ID for training the first algorithm in the first training stage.

Furthermore, an out-of-domain database OOD-DB comprising a plurality of out-of-domain data elements OOD is used to train the first algorithm ALG1.

In the first training stage ST1 a pre-trained model PTM of the first algorithm ALG1 is obtained by following the training procedure as explained in FIG. 3A and FIG. 3B, using the masked noisy spectrogram prediction MSP loss function LOSS1. The pre-trained model PTM comprises an encoder ENC. After the first training stage ST1, the trained encoder ENC from the pre-trained model PTM is used for the second training stage ST2. The parameters of the trained encoder ENC are fixed for the second training stage ST2. In the second training stage ST2, a fine-tuned model FTM of the first algorithm is obtained using a speech enhancement loss function SE such as the SI-SNR loss function LOSS2.

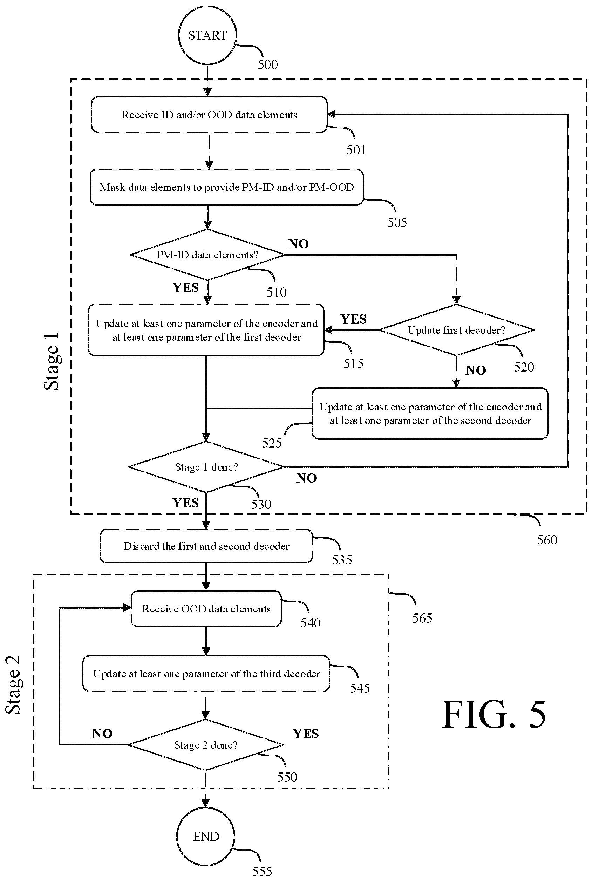

FIG. 5 illustrates an exemplary flow diagram, showing the steps for training a first algorithm ALG1 using at least one in-domain data element ID and at least one out-of-domain data element OOD according to FIG. 3A, FIG. 3B, and FIG. 3C. The training begins at START 500 wherein the parameters of the encoder ENC, the first decoder DEC1, the second decoder DEC2, and the third decoder DEC3 are initialized. The initial values of the parameters of the encoder ENC, the first decoder DEC1, the second decoder DEC2, and the third decoder DEC3 may be chosen by either sampling values from a probability distribution, setting the values to a pre-determined value, e.g. zero, or copied from an pre-trained encoder, e.g. transfer learning.

The training the encoder ENC and decoders DEC1, DEC2, DEC3 may be divided into a first training stage 560 and a second training stage 565 as depicted in FIG. 5. In the first stage 560, the encoder ENC, first decoder DEC1, and second decoder DEC2 are trained.

In step 501 at least one in-domain data element ID and/or at least one out-of-domain data element OOD is received from an in-domain database or out-of-domain database. The at least one in-domain data element ID and/or the at least one out-of-domain data element OOD is then masked by a masking unit in 505 to respectively provide at least one partly masked in-domain data elements PM-ID and/or at least one partly masked out-of-domain data elements PM-OOD.

In step 510 a conditional statement is used to determine if the at least one provided data element for the first algorithm ALG1 contains partly masked in-domain data elements PM-ID. If 'YES', i.e. the provided data elements contain partly masked in-domain data elements PM-ID, then at least one of the parameters of the encoder ENC and the first decoder DEC1 is updated using the at least one partly masked in-domain data elements (and out-of-domain data elements if provided) in step 515.

If the at least one provided data element does not include any partly masked in-domain data elements PM-ID, then training proceeds to step 520 wherein a conditional statement decides if the first decoder DEC1 should be updated. This decision is pre-determined. If the conditional statement returns 'YES' then at least one of the parameters of the encoder ENC and the first decoder DEC1 is updated using the at least one out-of-domain data element OOD in step 515.

If 'No' then at least one of the parameters of the encoder ENC and the second decoder DEC2 is updated using the out-of-domain data element OOD in step 520. After updating the parameters in step 515 or step 525 then a conditional statement in step 630 is used to decide whether the first training stage 560 is done. This decision may be decided upon a pre-determined stopping criterion.

In the second training stage 565 the parameters of the encoder ENC are kept fixed, the first and second decoders DEC1, DEC2 are discarded and the third decoder DEC3 is trained. In the first step of the second training stage 540, at least one out-of-domain data element is received from an out-of-domain database. In step 545, at least one of the parameters of the third decoder DEC3 is updated using the at least one out-of-domain data element OOD.

In step 550 a conditional statement is used to determine if the training in the second training stage 565 is done. If the training in stage 2 is not done, then the training return to step 540. If the training the second training stage 565 is done 555, then the determining the parameters of the first algorithm ALG1 is done and fixed.

METHOD OF TRAINING A SECOND ALGORITHM:

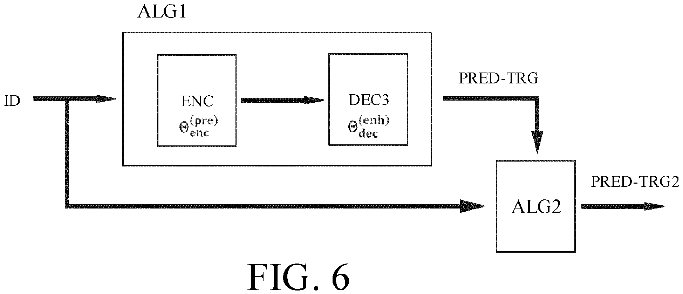

FIG. 6 illustrates an exemplary block diagram of units and data used for training a second algorithm ALG2, using the trained first algorithm ALG1 and at least one in-domain data element ID. The first algorithm ALG1 comprises a trained encoder ENC and a trained third decoder DEC3.

The first algorithm ALG1 receives the at least one in-domain data elements ID to produce predicted target component PRED-TRG. The second algorithm ALG2 receives the predicted target component PRED-TRG by the first algorithm ALG1 and the at least one in-domain data element ID.

The second algorithm ALG2 comprises a second artificial neural network configured to extract a target component PRED-TRG2 given the at least one in-domain data element ID. The second algorithm ALG2 uses the predicted target component PRED-TRG of the first algorithm ALG1 and the at least one in-domain data element ID to train the second algorithm ALG2. The second algorithm ALG2 is trained using the scale-invariant signal-to-noise ratio SI-SNR loss function.

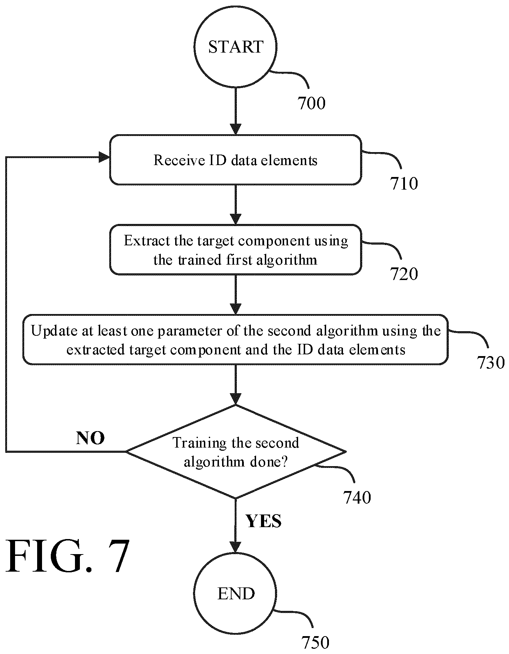

FIG. 7 illustrates an exemplary flow diagram, showing the steps for training a second algorithm ALG2 using the trained first algorithm ALG1, and at least one in-domain data element ID. Training of the second algorithm ALG2 begins at START in step 700 wherein the parameters of the second algorithm ALG2 are initialized. The initial values of the parameters of the second algorithm ALG2 may be chosen by either sampling values from a probability distribution, setting the values to a pre-determined value, e.g. zero, or copied from an pre-trained encoder, e.g. transfer learning.

In step 710 at least one in-domain data element ID are received from an in-domain database. The trained first algorithm ALG1 receives the at least one in-domain data elements ID and provides extracted target components in step 720. The second algorithm ALG2 receives the at least one in-domain data element ID and the extracted/predicted target component PRED-TRG from the trained first algorithm ALG1 and uses them to update 730 at least one of the parameters of the second algorithm ALG2.

In step 740 a pre-determined conditional statement is used to determine if the training of the second algorithm ALG2 is done. If 'NO' then step 710 is repeated by receiving at least one new in-domain data element ID. If 'YES', the training of the second algorithm ALG2 is completed and ends in step 750. The parameters of the second algorithm ALG2 are fixed and saved.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

**Claims**

1. Method for training a first algorithm (ALG1) for extracting at least one desired component of a sound signal, the first algorithm (ALG1) comprising an encoder (ENC) and a first decoder (DEC1), the encoder (ENC) and the first decoder (DEC1) each comprising at least one parameter, wherein the method comprises training (560) the encoder (ENC) and first decoder (DEC1), comprising:

   obtaining (505) at least one partly masked in-domain data element (PM-ID), wherein the at least one partly masked in-domain data element (PM-ID) comprises a noisy component,
   using the at least one partly masked in-domain data element (PM-ID) to determine (515) a value of the at least one parameter of the encoder (ENC) and the at least one parameter of the first decoder (DEC1) optimizing the prediction, by the first algorithm (ALG1), of the noisy component (PRED-NSY) in at least one masked part of the at least one partly masked in-domain data element (PM-ID).

2. Method for training the first algorithm (ALG1) according to claim 1, wherein training of the encoder (ENC) and first decoder (DEC1) further comprises:

   obtaining (505) at least one partly masked out-of-domain data element (PM-OOD), comprising a mixture component comprising a target component and a noise component,
   using the at least one partly masked out-of-domain data element (PM-OOD) to determine (515) the value of the at least one parameter of the encoder (ENC) and the at least one parameter of the first decoder (DEC1) optimizing the prediction, by the first algorithm (ALG1), of the target component (PRED-TRG) in at least one masked part of the at least one partly masked out-of-domain data element (PM-OOD).

3. Method for training the first algorithm (ALG1) according to claim 2, wherein the at least one partly masked out-of-domain data element (PM-OOD) is a partly masked spectrogram and/or the at least one partly masked in-domain data element (PM-ID) is a partly masked spectrogram.

4. Method for training the first algorithm (ALG1) according to any one of claims 2 or 3, wherein:

   • the obtaining (505) of the at least one partly masked out-of-domain data element (PM-OOD) comprises:

      • dividing a first out-of-domain data element (OOD) comprising a mixture component comprising a target component and a noise component into a plurality of first patches, and
      • masking a predefined percentage of the plurality of first patches, to obtain the at least one masked part of the at least one partly masked out-of-domain data element (PM-OOD) and/or

   • the obtaining (505) of the at least one partly masked in-domain data element (PM-ID) comprises:

      • dividing a first in-domain data element (ID) comprising at least one noisy component into a plurality of second patches, and
      • masking a predefined percentage of the plurality of second patches, to obtain the at least one masked part of the at least one partly masked in-domain data element (PM-ID).

5. Method for training the first algorithm (ALG1) according to any one of claims 2-4, wherein during the training (560) of the encoder (ENC), the first algorithm (ALG1) comprises the first decoder (DEC1) and a second decoder (DEC2):

• the second decoder (DEC2) being also trained during the training (560) of the encoder (ENC), using the at least one partly masked out-of-domain data element (PM-OOD), the encoder and the second decoder being trained to optimize the prediction, by the first algorithm (ALG1), of the target component (PRED-TRG) in the at least one masked part of the at least one partly masked out-of-domain data element (PM-OOD), and

• the first decoder (DEC1) being also trained during the training (560) of the encoder (ENC), using the at least one partly masked in-domain data element (PM-ID) and/or the at least one partly masked out-of-domain data element (PM-OOD), the encoder and the first decoder being trained to respectively optimize the prediction, by the first algorithm (ALG1), of the noisy component (PRED-NSY) in the at least one masked part of the at least one partly masked in-domain data element (PM-ID), and/or the target component (PRED-TRG) in the at least one masked part of the at least one partly masked out-of-domain data element (PM-OOD).

6. Method for training the first algorithm (ALG1) according to claim 5, wherein the first decoder (DEC1) and/or the second decoder (DEC2) are discarded (535) after the training (560) of the encoder (ENC).

7. Method for training the first algorithm (ALG1) according to any one of claims 2-6, wherein when using the at least one partly masked out-of-domain data element (PM-OOD) to determine (515) the value of the at least one parameter of the encoder (ENC), the value of the at least one parameter is determined by minimizing a first loss function measuring discrepancy between a predicted target component (PRED-TRG) and a corresponding target component of the at least one partly masked out-of-domain data element (PM-OOD).

8. Method for training the first algorithm (ALG1) according to any one of claims 1-7, wherein when using the at least one partly masked in-domain data element (PM-ID) to determine (515) the value of the at least one parameter of the encoder (ENC), the value of the at least one parameter is determined by minimizing a second loss function determining discrepancy between a predicted noisy component (PRED-NSY) and a corresponding noisy component of the at least one partly masked in-domain data element (PM-ID).

9. Method for training the first algorithm (ALG1) according to claim 7 or 8, wherein determining discrepancy comprises determining a magnitude loss by providing a logarithmic sum of squared errors between the absolute value of the predicted target component (PRED-TRG) and the corresponding target component of the at least one partly masked out-of-domain data element (PM-OOD), or between the predicted noisy component (PRED-NSY) and the corresponding noisy component of the at least one partly masked in-domain data element (PM-ID).

10. Method for training the first algorithm (ALG1) according to 9, wherein determining discrepancy further comprises:

• determining a phase loss by providing a logarithmic sum of weighted squared errors between a normalized predicted target component and a normalized corresponding target component of the at least one partly masked out-of-domain data element (PM-OOD), or between a normalized predicted noisy component and a normalized corresponding noisy component of the at least one partly masked in-domain data element (PM-ID).

• determining a magnitude-phase loss by providing a weighted sum between the magnitude loss and the phase loss wherein the weighting comprises at least one weighting factor.

11. Method for training the first algorithm (ALG1) according to any of previous claims, further comprising:

• adding a third decoder (DEC3) to the first algorithm (ALG1), the third decoder (DEC3) comprising at least one parameter,

• obtaining a second out-of-domain data element (OOD) comprising a mixture comprising at least one target component and at least one noise component, and

• training (565) a third decoder (DEC3) using the trained encoder (ENC), comprising using the second out-of-domain data element (OOD) to determine (545) a value of the at least one parameter of the third decoder (DEC3) optimizing the prediction, by the first algorithm (ALG1), of the target component (PRED-TRG) of the second out-of-domain data element (OOD).

12. Method for training the first algorithm (ALG1) according to any of the previous claims, performed by a processor of at least one hearing aid (HA) and/or at least one computer.

13. Method for training a second algorithm (ALG2) for extracting at least one desired component of a sound signal, comprising:

• using the first algorithm (ALG1) trained according to any one of claims 1-12 to extract (720) at least one target component (PRED-TRG) from at least one second in-domain data element (ID) comprising said target component,

• using the at least one second in-domain data element (ID) and the at least one target component (PRED-TRG) extracted from the at least one second in-domain data element (ID) by the first algorithm (ALG1), to determine (730) a value of the at least one parameter of the second algorithm (ALG2) optimizing the prediction of the at least one target component (PRED-TRG) extracted from the at least one second in-domain data element (ID).

14. Method of using a first algorithm (ALG1) for extracting at least one desired component of a sound signal, the first algorithm (ALG1) being trained according to any one of claims 1 to 12, or method of using a second algorithm (ALG2) for extracting at least one desired component of a sound signal, the second algorithm (ALG2) being trained according to any one of claims 13.

15. A hearing aid comprising:

• at least one input transducer (IN) configured to receive at least one first sound signal comprising a desired component and/or a noise component from an acoustic environment, and to provide at least one electrical signal representing the at least one first sound signal,

• a first algorithm (ALG1) trained according to any one of claims 1 to 12 or a second algorithm (ALG2) trained according to claim 13, wherein the first algorithm (ALG1) or the second algorithm (ALG2) is configured to extract the at least one desired component of the at least one first sound signal,

• at least one output transducer (OUT) configured to output a second sound signal based on the least one extracted desired component.

**FIG. 1**

ALG1

ID → MU → PM-ID → [ ENC $\Theta_{enc}^{(pre)}$ ] → PRED-NSY

# FIG. 2A

ID or OOD → MU → PM-ID or PM-OOD →

# FIG. 2B

START

200

Receiving partly masked in-
domain data elements

210

Determine at least one
parameter of the encoder

220

END

230

# FIG. 2C

ALG1

ID and/or
OOD

MU

PM-ID and/
or PM-OOD

ENC
$\Theta_{enc}^{(pre)}$

DEC1
$\Theta_{dec-n}^{(pre)}$

PRED-NSY

DEC2
$\Theta_{dec-c}^{(pre)}$

# FIG. 3A

ALG1

FIG. 3B

ALG1

FIG. 3C

FIG. 4

START
500

Stage 1

Receive ID and/or OOD data elements
501

Mask data elements to provide PM-ID and/or PM-OOD
505

PM-ID data elements?  **NO**
510

**YES**

Update at least one parameter of the encoder and at least one parameter of the first decoder
515

**YES** Update first decoder?
520

**NO**

Update at least one parameter of the encoder and at least one parameter of the second decoder
525

Stage 1 done?  **NO**
530

**YES**
560

Discard the first and second decoder
535

565

Stage 2

Receive OOD data elements
540

Update at least one parameter of the third decoder
545

**NO** Stage 2 done?  **YES**
550

END
555

FIG. 5

EP 4 560 628 A1

ALG1

ID

ENC
$\Theta_{enc}^{(pre)}$

DEC3
$\Theta_{dec}^{(enh)}$

PRED-TRG

ALG2

PRED-TRG2

FIG. 6

32

START

700

Receive ID data elements

710

Extract the target component using
the trained first algorithm

720

Update at least one parameter of the second algorithm using the
extracted target component and the ID data elements

730

NO

Training the second
algorithm done?

740

YES

**FIG. 7**

END

750

Europäisches Patentamt
European Patent Office
Office européen des brevets

# EUROPEAN SEARCH REPORT

**Application Number**

EP 24 21 5140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PO-YAO HUANG ET AL: "Masked Autoencoders that Listen", ARXIV.ORG, CORNELL UNIVERSITY LIBRARY, 201 OLIN LIBRARY CORNELL UNIVERSITY ITHACA, NY 14853, 12 January 2023 (2023-01-12), XP091412595, | 1-4,7-15 | INV. G10L21/0208 G10L21/0272 G10L25/30 |
| A | * the whole document * | 5,6 | ADD. H04R25/00 |
| X | ZHONG ZHI ET AL: "Extending Audio Masked Autoencoders toward Audio Restoration", 2023 IEEE WORKSHOP ON APPLICATIONS OF SIGNAL PROCESSING TO AUDIO AND ACOUSTICS (WASPAA), IEEE, 22 October 2023 (2023-10-22), pages 1-5, XP034423540, DOI: 10.1109/WASPAA58266.2023.10248171 | 1,8-10, 12-15 | |
| A | * the whole document * | 5,6 | |
| X | DAISUKE NIIZUMI ET AL: "Masked Spectrogram Modeling using Masked Autoencoders for Learning General-purpose Audio Representation", ARXIV.ORG, CORNELL UNIVERSITY LIBRARY, 201 OLIN LIBRARY CORNELL UNIVERSITY ITHACA, NY 14853, 26 April 2022 (2022-04-26), XP091209769, | 1,8-10, 12,15 | |
| A | * the whole document * | 5,6 | |
| X | CHONG DADING ET AL: "Masked Spectrogram Prediction for Self-Supervised Audio Pre-Training", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034449900, DOI: 10.1109/ICASSP49357.2023.10095691 | 1,8-10, 12-15 | |
| A | * the whole document * | 5,6 | |

**TECHNICAL FIELDS SEARCHED (IPC)**

G10L
H04S
H04R

The present search report has been drawn up for all claims

| Place of search | Date of completion of the search | Examiner |
|---|---|---|
| The Hague | 20 March 2025 | Scappazzoni, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)